# EUROPEAN PATENT SPECIFICATION

(11) **EP 3 257 823 B1**
(45) Date of publication and mention of the grant of the patent: **02.09.2020**
(21) Application number: 17176146.3
(22) Date of filing: 14.06.2017
(51) Int. Cl.: C03B 9/453

(54) **GRASPING MEMBER AND ASSEMBLY FOR TRANSFERRING HOLLOW GLASS ITEMS**
GREIFELEMENT UND ANORDNUNG ZUR ÜBERTRAGUNG HOHLER GLASTEILE
ORGANE DE PRÉHENSION ET ENSEMBLE PERMETTANT DE TRANSFÉRER DES ARTICLES EN VERRE CREUX

(30) Priority: 14.06.2016 IT UA20164366
(43) Date of publication of application: 20.12.2017
(73) Proprietor: Bottero S.p.A., 12100 Cuneo (IT)
(72) Inventor: VIADA, Bruno, 12100 CUNEO (IT); MACAGNO, Luca, 12016 PEVERAGNO (IT)
(74) Representative: Lovino, Paolo

(56) References cited:
- WO-A1-2011/060289
- GB-A- 1 209 169
- GB-A- 2 435 025
- US-A- 2 586 865
- US-A- 2 677 919
- US-A- 3 318 433
- US-A- 3 708 052
- US-A- 5 814 120

## Description

The present invention relates to a grasping member for transferring hollow glass items.

The present invention applies specifically to machines for moulding hollow glass items, commonly known as I.S. machines. Said machines generally comprise a plurality of moulding sections operating parallel to each other and each comprising their own moulding dies with one or more moulding cavities designed to realise respective hollow glass items, in sequence, according to a predefined moulding plan.

The items coming out of the dies of each moulding section are first transferred onto a relative supporting plate commonly known as a "dead plate" and from here, they are subsequently moved to a discharge conveyor common to all sections.

The items are moved by each supporting plate to the conveyor along a curved path using a thrust device having one or more motorised articulated arms and a grasping member, commonly known as a "shovel".

The grasping member is coupled to the free end of the articulated arm and presents one or normally, more aligned spaces, each housing one of the items to be transferred, when in use. The spaces are generally defined by a pair of vertical flat plates that are mutually orthogonal and against which the relative item is arranged.

In some cases, the items are held in contact with the plates using a pneumatic suction device designed to create a depression area between the plates and the item to be transferred.

Although used, the known grasping members of the type described above are inadequate for the following reasons.

First and foremost, the pneumatic devices are inefficient in the case of items that are multi-faceted or delimited by tapered, convex or flat outer surfaces as it is difficult to obtain and maintain a sufficient depression in the stated area and consequently realise an efficient and invariant locking action.

Besides this, the pneumatic devices cool the items locally creating unwanted differences in temperature and, consequently, inconsistent cooling of the items.

Not only, but the forces generated by the pneumatic devices deform the items being produced unpredictably, to such an extent that the items do not pass the geometric and dimensional quality checks and consequently have to be discarded at the end of the production cycle.

Finally, the pneumatic devices are not able to guarantee constant angular positioning of the item inside the relative space during the whole transfer phase. In fact, the combination of the centrifugal and inertia action and the friction components along the transfer path, on the supporting plate, generate a torque on the items that makes the items rotate on themselves around vertical axes. Although said rotation causes only minimal problems during the transfer of cylindrical items, such as common cylindrical bottles, it is, however, problematic in the case of multi-faceted items or items with polygonal sections in plan view. After rotating on themselves, said items are released onto the conveyor in positions that are angular and non-predefinable, but above all, different to each other. Arbitrary angular positions create grasping problems in the subsequent automatic handling of the items. Grasping members for transferring hollow glass articles are disclosed for example in WO2011060289, GB2435025, US3318433, US2586865 and GB1209169.

The aim of the present invention is to realise a grasping member, which provides a simple and cheap solution to the previously stated problems and, in particular, a grasping member that makes it possible to arrange the items in an equioriented position on the discharge conveyor.

A further aim of the present invention is to realise a grasping member that is simple and cheap to make, with a contained weight that is easy to replace and adapt quickly to different productions.

According to the present invention, a movable grasping member is provided, as claimed in claim 1.

Moreover, the present invention relates to a method for transferring hollow glass items.

According to the present invention, a method is provided for transferring hollow glass items, as claimed in claim 16.

The invention will now be described with reference to the accompanying drawings, which illustrate a non-limiting embodiment, wherein:
Figures 1 and 2 schematically illustrate a preferred embodiment, substantially in blocks, of an assembly for transferring hollow glass items according to the dictates of the present invention, arranged in two different functional positions;
Figures 3 and 4 illustrate a detail in Figures 1 and 2 in side elevation and plan view respectively;
Figures 5 and 6 illustrate two different variations of the detail in Figure 3; and
Figure 7 illustrates several variations of the detail in Figure 5, on an enlarged scale.

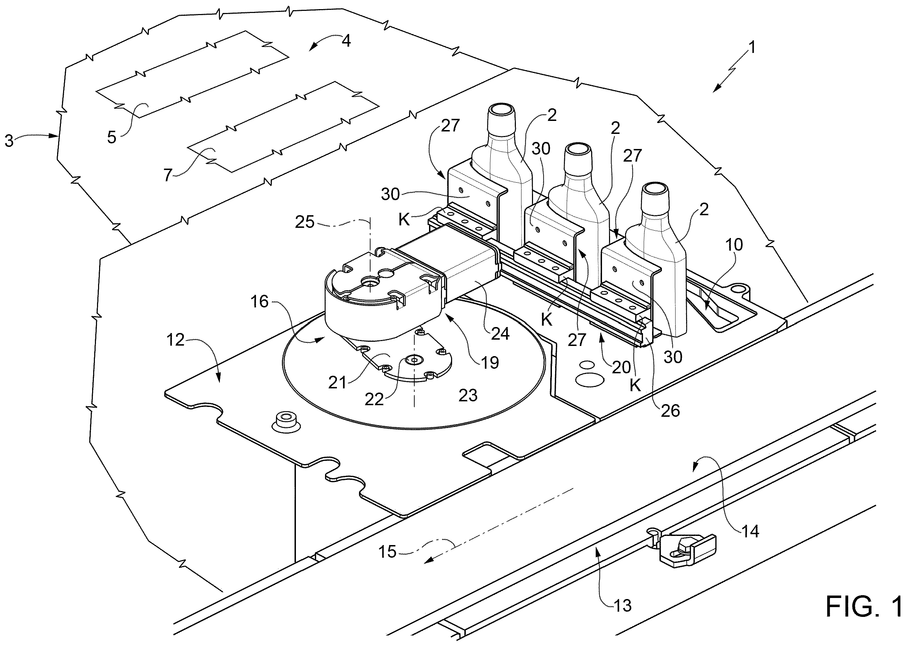

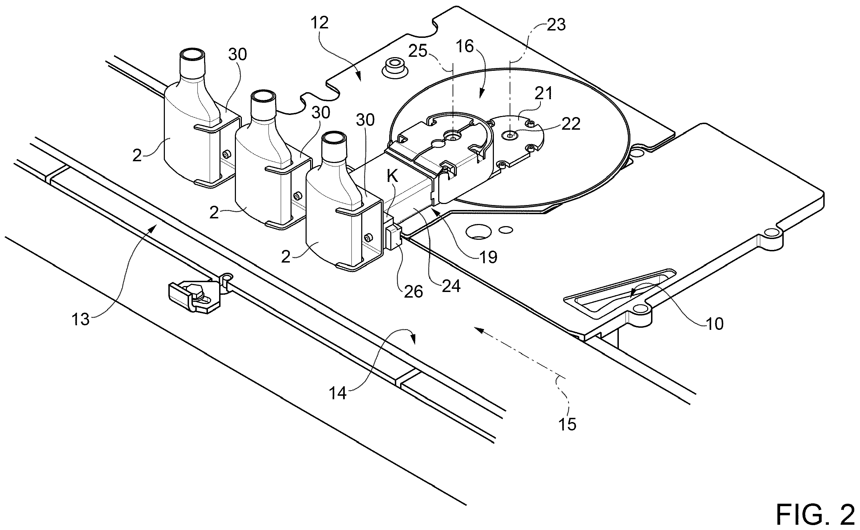

In Figure 1, 1 globally indicates an assembly for transferring glass items 2 onto an I.S. machine 3 for moulding the glass items 2. The machine 3 itself is known and partially visible in Figures 1 and 2 and comprises a plurality of moulding sections 4, only one of which is partially visible in Figures 1 and 2.

In turn, each section 4 comprises a relative die assembly 5 for moulding the items 2 and a device 7 for moving the items 2 from the die assembly 5 to a relative horizontal supporting plate 10 commonly known as a "dead plate".

The plate 10 constitutes part of an assembly 12 for transferring the items 2 resting on the plate 10. Besides the plate 10, the assembly 12 comprises a conveyor 13 for discharging items, in turn, comprising a horizontal delivery branch 14 alongside the plate 10 and coplanar with the plate 10 designed to move the items 2 in one direction 15.

Again with reference to Figures 1 and 2, the assembly 12 also comprises a transfer device 16 for collecting the items 2, in this particular case three, from the plate 10 and arranging them in an equioriented position on the delivery branch 14 (Figure 2).

The transfer device 16 comprises a motorised articulated arm, known and indicated by 19, and an item grasping assembly 20 carried by the arm 19 itself.

In the particular illustrated example, the arm 19 comprises a crank 21 having a terminal portion mounted onto a motorised rotating shaft 22 with a revolving action around a fixed axis 23 orthogonal to the plate 10 and the branch 14. The arm 19 also comprises a connecting rod 24 hinged to the crank 21 to rotate around a movable hinge axis 25 and holding, coupled to one of its free ends, the assembly 20. Again in the illustrated example, the grasping assembly 20 comprises an attachment bar 26 jointly connected to the connecting rod 24 and three grasping members 27, one for each item 2, coupled in spaced out positions, which can be adjusted along the bar 26.

According to a non-illustrated variation, the assembly 20 comprises a motorised, or not, angular adjustment device inserted between the connecting rod 24 and the bar 26 to vary the position of the bar 26 in relation to the connecting rod 24 around a vertical axis.

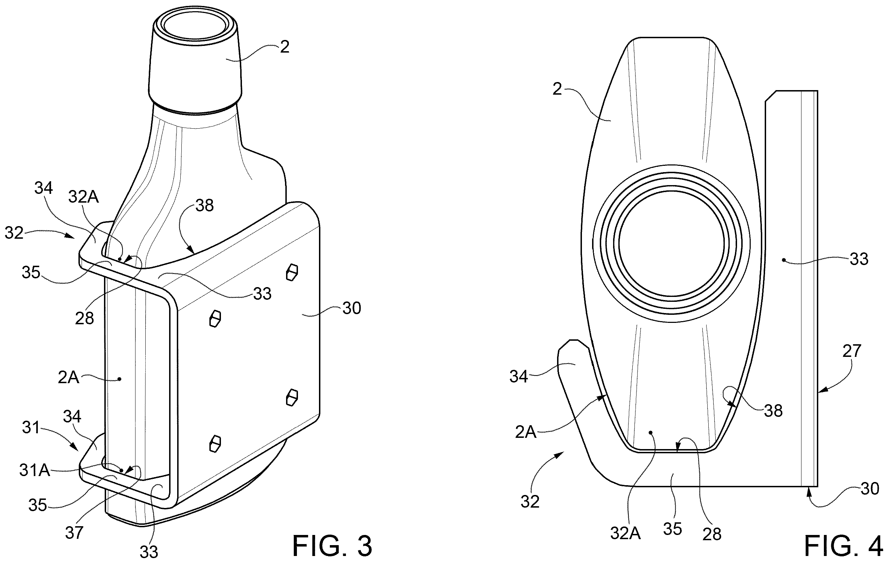

Whereas, according to a further non-illustrated variation, the connecting rod 24 carries a single grasping member 27. Independently of the number, each grasping member 27 is a member realised in one single piece. Advantageously, each member 27 is realised from a flat metallic plate cut with a laser and bent in a U-shape (Figure 3).

Eeach member 27 delimits, in any case, a seat 28 that rounds up an end perimeter portion 2A of the item 2 to allow the item 2 to go in and come out during the steps of collection from the supporting plate 10 and during the release onto the conveyor 13 respectively and, at the same time, to prevent the rotation of the relative item 2 inside the seat 28, that is in relation to the member 27, around vertical axes and parallel to the axes 23 and 25, as we can see in Figures 3 and 4.

In particular, each member 27 comprises a vertical portion 30 with a plate fixed, for example with screws, to a K member for attaching to the bar 26 (Figures 1 and 2), which can be positioned along the bar 26 or to the angular adjustment device, when present.

Moreover, each member 27 comprises two horizontal portions shaped in a C or a U, indicated in Figure 3 by 31 and 32. The portions 31 and 32 are plate-shaped portions, or better cut plates, parallel to the supporting plate 10, they each have a recess that defines the seat 28, at least partially, and they extend in an overhanging manner from a lower terminal section and from an upper terminal section of the portion 30 and from opposite parts of the portion 30 in relation to the bar 26 respectively.

The portions 31 and 32, in this particular case, having identical geometries and dimensions, each envelop or surround a relative part 31A, 32A of the portion 2A.

The portions 31 and 32 comprise respective arms 33 and 34 which face each other and are coplanar with and parallel to the plate 10 and a relative crosspiece 35 for connecting the arms 33 and 34. The arms 33 are stably connected to the portion 30 and have a length measured parallel to the bar 26 or to the greater direction 15 of that of the arms 34. The arms 34 end with a section that is tapered towards the free end to facilitate the item 2 going in and coming out. The recesses of the portions 31 and 32 are delimited by respective surfaces 37 and 38, which follow the outer lateral surfaces of the respective parts 31A and 32A. In this case and with reference to Figure 4, the inner surfaces 37 and 38 have a profile, in plan view, which is practically complementary to the profile of the projections in plan view of parts 31A and 32A. A minimum play is present between the two profiles to allow the insertion into, and the extraction of the item 2 from, the seat 28. Again with reference to Figure 3, each of the inner surfaces 37 and 38 comprises two respective curved areas with identical or different concavities facing each other. The curved areas delimit the arms 33 and the arms 34 and converge towards each other and towards the relative crosspiece 35. Again, in this case, each crosspiece 35 is delimited by a flat area of the relative surface 37, 38. According to a non-illustrated variation, the crosspieces 35 are also delimited by curved surfaces.

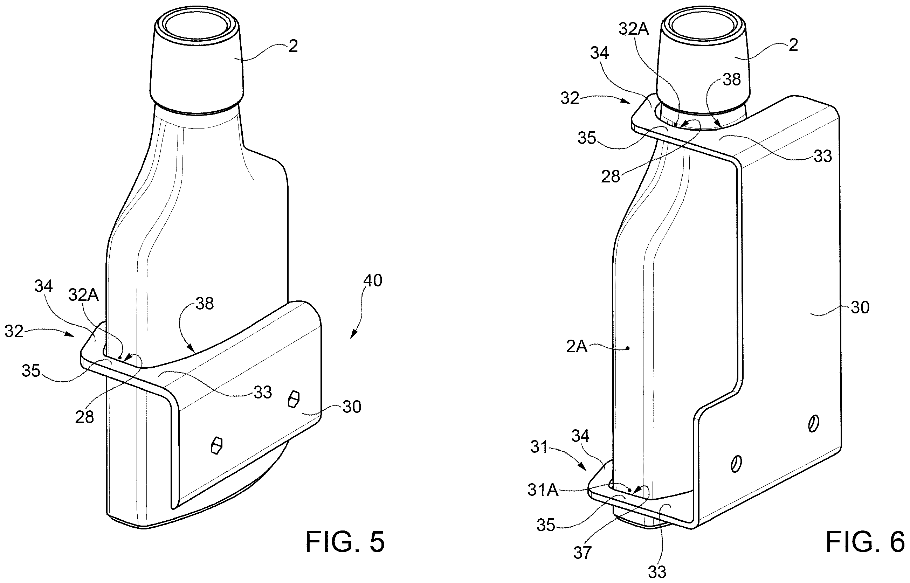

In the variation illustrated in Figure 6, the portions 31 and 32 envelop parts 31A and 32A, which are opposite terminal parts of the item 2, in this particular case a bottom portion and a neck portion. In this case, the surfaces 37 and 38 have different geometries and dimensions and consequently corresponding areas with a different curvature and this in itself is enough to create an anti-rotating action of the item 2 in the seat 28.

The variation illustrated in Figure 5, relates to a member 40, which differs from the member 27 in that it only comprises portion 32. In this case, the portion 32 is set at a height from the supporting plate 10 that is chosen according to the varying dimensional and geometric characteristics and the mass of the item 2 to be transferred and, in particular, to avoid the formation of torques tending to overturn the item during transfer. Advantageously, but not necessarily, the portion 32 acts on the centre of gravity of the item or around the centre of gravity.

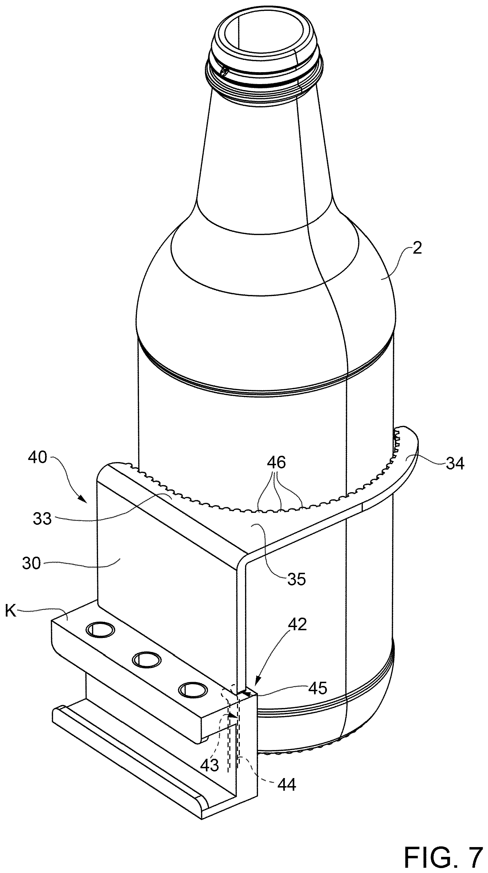

In the variation illustrated in Figure 7, the portion 30 is coupled to the attachment member K by means of a quick coupling device 42. The device 42 is designed to allow the member 40 to be replaced rapidly, without requiring any special equipment or simple keys, but above all to allow the member 40 to be extracted from above.

In this particular case, the device 42 comprises a vertical guide defined, in this case, by a vertical opening 43 made on the K body, and an attachment portion defined, again in this case, by a vertical plate 44 made up of a terminal section of the portion 30 and engaging the opening 43 in a sliding manner. A projection 45 of the portion 30 rests on the K member to stop the member 40 vertically and allow the free vertical extraction of the member 40 itself.

Of course, a similar quick change device of the type previously described can be used for coupling the members 27. Advantageously, in this case, the plate 44 is defined by an intermediate portion of the portion 30 and it is obtained, advantageously, by cutting and plastic deformation of the portion 30. In this way, the portion 30 and the plate 44 constitute part of a body made in one single piece.

Independently of how the attachment plate 42 is made, the possibility of extracting the grasping members from above significantly reduces the intervention time and has proven to be extremely advantageous as the free spaces in the area where the transfer assembly 12 of the items works 2 are reduced.

Again with reference to Figure 7, the arms 33 and 34 and the crosspiece 35 are no longer delimited by practically smooth surfaces but by respective rough surfaces. The arms 33 and 34 and the crosspiece 35 preferably end with respective serrations having rounded teeth 46 or flat ends to avoid damaging the item 2 being transferred and create an effective anti-rotation action of the item 2 at the same time and a minimum heat exchange, resulting from a minimum contact surface. According to non-illustrated variations, serration is only foreseen on the arms 33 and 34, or on only one of the arms 33, 34.

In use, considering only one item 2 to be transferred for simplicity, arranged on the plate 10, the grasping member 27,40 is moved by the arm 19 and the item 2 gradually inserted into the seat 28. During insertion, the item 2 is gradually taken by portions 31,32 and arranged in a reference position imposed by the gradual support against the inner surfaces 37,38, consequently, when insertion is complete, the item 2 is arranged in a predefined and desired reference position in relation to the grasping member. At this point, the member 27, 40 gradually moves the item 2 towards the conveyor 13 along a predefined curved path. During said movement, the item 2 is always enveloped and held by the portions 31,32, which prevent it not only from leaving the seat 28 as a result of a centrifugal effect, but also from rotating on itself inside the seat 28, thus maintaining its initial reference position.

From the above, it is clear how, on the one hand, the presence and conformation of the portions 31,32 or of just portion 32 without portion 31, makes it possible to position the items 2 on the conveyor 13 in predefined and equioriented positions, eliminating all problems at the root related to the subsequent robotic handling of the items 2.

Compared to the known retaining methods, the fact of retaining each item 2, distributing the retaining action on one or more extended outer surfaces for supporting the item 2 on portions 31,32 allows us to obtain items without dents, scratches and localised deformations in general, caused during the known solutions, also in part by rotation inside the seat, preserving both the aesthetic quality of the item produced and the structural consistency of the item itself.

Lastly, the advantages, which can be gained in terms of quality and positioning constancy of the previously described transferred product by using a grasping member that is extremely simple to make, cheap and with a low weight, are evident. The described member 27 can, in fact, be obtained extremely quickly, starting from a simple plate with a thickness of between 1 and 5 millimetres or a flat sheet, that is a common surface with a thickness of 2 or 3 millimetres, which is cut using a common laser beam to make the surfaces 37 and 38, simply bent in the shape of a U and deformed plastically to make the quick change device 42 when foreseen. Besides being simple, cheap and geometrically stable, such a procedure means that the seat 28 can be conformed according to the aesthetic and/or geometric characteristics of the product to be transferred and that the configuration of the transfer assembly can be modified quickly with every production change. In other words, the described procedure makes it possible to obtain cheap transfer members for transferring a specific item regardless of the geometric characteristics of the item in question.

From the above, it is clear that modifications and changes can be made to the described transfer member 27,40 without going beyond the protective scope defined by the independent claims.

In particular, portions 31 and 32 may present a different structure or different dimensions and geometries from those specified by way of example to adapt to the dimensions/geometries, shape and weight of the items to be transferred.

Similarly, the attachment portion 30 may present a different shape and/or geometries to those specified for the use of quick change or attachment devices different to those described above.

## Claims

1. A movable grasping member (27) for a device (16) for transferring hollow glass items (2) from a horizontal supporting plate (10) to a discharge conveyor (13), the grasping member (27) having at least one housing seat (28) for at least one portion of an item (2) to be transferred, and comprising a vertical attachment plate (30) designed to be connected to said transfer device, and means (31) (32) for retaining said glass item (2) in said seat (28), **characterised in that** said retaining means comprise at least a first horizontal plate-shaped body (32) extending in an overhanging manner from said vertical plate (30) and stably connected to an upper terminal portion of said vertical plate (30); said first horizontal plate-shaped body (32) extending, in use, parallel to the horizontal supporting plate (10) and having a recess designed to house, in use, at least partially, the portion of the item (2) to be transferred and delimited by an inner surface (38) for supporting the item; said inner surface having, in plane view, a profile complementary to an outer surface of said portion of the item (2).

2. The member according to claim 1, **characterised in that** said supporting inner surface (38) comprises at least one supporting area facing, and spaced apart from, said vertical plate (30).

3. The grasping member according to claim 1 or 2, **characterised in that** said supporting inner surface (38) comprises a first and at least a second area having different curvatures.

4. The grasping member according to claim 1 or 2, **characterised in that** said supporting inner surface (38) comprises a first and at least a second area converging towards each other.

5. The grasping member according to claim 3 or 4, **characterised in that** said supporting inner surface (38) comprises at least one flat or serrated area.

6. The grasping member according to any of the preceding claims, **characterised in that** said first horizontal plate-shaped body (32) is a C or a U shaped body.

7. The member according to any of the preceding claims, **characterised in that** said horizontal plate-shaped body (32) comprises two arms (33) (34) facing each other, transversally spaced apart from each other and delimited by respective portions of said inner surface; one (33) of said arms (33) (34) being stably connected to, or constituting part of, said vertical plate (30).

8. The member according to claim 7, **characterised in that** said arms (33)(34) are of different lengths.

9. The member according to any of the preceding claims, **characterised in that** it comprises a second horizontal plate-shaped body (31) extending in an overhanging manner from said vertical plate (30) and coupled to said vertical plate (30) in a position spaced apart from said first horizontal plate-shaped body (32).

10. The member according to claim 9, **characterised in that** said first and second horizontal plate-shaped body are delimited by respective inner surfaces, which are identical to, or different to each other.

11. The member according to any of the preceding claims, **characterised in that** said vertical attachment plate (30) and said horizontal plate-shaped body constitute part of a monolithic body made in one single piece.

12. The member according to claim 9, **characterised in that** said vertical attachment plate (30) and said first and second horizontal plate-shaped retaining bodies constitute an intermediate portion and, respectively, two terminal portions of one single plate or sheet, which is metallic, monolithic cut and bent in a U-shape.

13. An assembly (12) for transferring hollow glass items (2); the assembly comprising a horizontal supporting plate (10) for supporting the glass items (2) to be transferred, a conveyor (13) for discharging the items, having a delivery branch (14) spaced from, and coplanar with, said supporting plate (10) and a transfer device (16) for transferring hollow glass items from the horizontal supporting plate to said delivery branch; said transfer device (16) comprising a grasping member (27) for grasping the items to be transferred and having at least one seat (28) for housing, at least part of an item (2) to be transferred, a motorised articulated arm (19) carrying said grasping member (27) and control means for controlling said articulated arm to move said grasping member along a curved path, **characterized in that** said grasping member (27) is made as claimed in claim 1.

14. The assembly according to claim 13, **characterised in that** it comprises a quick coupling device (42) connecting the vertical attachment plate (10) to said motorised articulated arm (19) to extract said grasping member from above; the device comprising a vertical guide (43) and a slide attachment portion (44) stably connected to said grasping member (27) and coupled to said guide so that it can be vertically slid out of the guide.

15. The assembly according to claim 14, **characterised in that** said slide attachment portion (44) and at least said vertical plate (30) constitute part of a body made in one single piece.

16. A method for transferring hollow glass items (2) from a horizontal supporting plate (10), supporting the glass items (2) to be transferred, towards an item discharge conveyor (13), having a delivery branch (14) spaced apart from, and coplanar with, said horizontal supporting plate (10), using a grasping member (27) as claimed in claim 1; the method comprising the steps of collecting the item to be transferred from the horizontal supporting plate (10) by inserting said item inside the partially housing seat (28), of moving the grasping member (27) from the horizontal supporting plate (10) to the delivery branch (14) along a curved path and of releasing the collected item onto said conveyor (13), **characterised in that** said item is locked mechanically in a fixed position inside said seat (28) in relation to said grasping member (27) during the movement of said grasping member towards said conveyor (13).

17. The method according to claim 16, **characterised in that** said angular locking comprises the step of partially enveloping the item using at least one horizontal plate-shaped body (32) constituting part of said member and having a shaped recess (38) having, in plane view, a profile complementary to a perimeter portion of said item (2).

## Patentansprüche

1. Ein bewegliches Greifelement (27) für eine Vorrichtung (16) zum Überführen vom Hohlglasartikeln (2) von einer horizontalen Trägerplatte (10) zu einem Abzugsförderer (13), wobei das Greifelement (27) zumindest einen Gehäusesitz (28) für zumindest einen Abschnitt eines zu überführenden Artikels (2) und eine vertikale Befestigungsplatte (30), die dazu ausgebildet ist, an die Überführungsvorrichtung angeschlossen zu werden, sowie Vorrichtungen (31) (32) aufweist zum Festhalten des Glasartikels (2) in dem Sitz (28), **dadurch gekennzeichnet, dass** die Haltevorrichtungen zumindest einen ersten horizontalen plattenförmigen Körper (32) aufweisen, der sich in einer überhängenden Art von der vertikalen Platte (30) erstreckt und mit einem oberen Anschlussabschnitt der vertikalen Platte (30) stabil verbunden ist; wobei sich der erste horizontale plattenförmige Körper (32) im Gebrauch parallel zu der horizontalen Trägerplatte (10) erstreckt und ein Aussparung aufweist, die dazu ausgebildet ist im Gebrauch den Abschnitt des zu überführenden Artikels (2) zumindest teilweise aufzunehmen, und die durch eine Innenfläche (38) zum Stützen des Artikels begrenzt wird; wobei die Innenfläche in Draufsicht ein Profil aufweist, das komplementär zu einer Außenfläche des Abschnitts des Artikels (2) ist.

2. Das Element nach Anspruch 1, **dadurch gekennzeichnet, dass** die stützende Innenfläche (38) zumindest einen Stützbereich aufweist, welcher der vertikalen Platte (30) zugewandt und von dieser beabstandet ist.

3. Das Greifelement nach Anspruch 1 oder 2, **dadurch gekennzeichnet, dass** die stützende Innenfläche (38) einen ersten und zumindest einen zweiten Bereich mit unterschiedlichen Wölbungen aufweist.

4. Das Element nach Anspruch 1 oder 2, **dadurch gekennzeichnet, dass** die stützende Innenfläche (38) einen ersten und zumindest einen zweiten Bereich aufweist, die sich einander annähern.

5. Das Greifelement nach Anspruch 3 oder 4, **dadurch gekennzeichnet, dass** die stützende Innenfläche (38) zumindest einen flachen oder gezahnten Bereich aufweist.

6. Das Greifelement nach einem der vorstehenden Ansprüche, **dadurch gekennzeichnet, dass** der erste horizontale plattenförmige Körper (32) ein C-förmiger oder ein U-förmiger Körper ist.

7. Das Element nach einem der vorstehenden Ansprüche, **dadurch gekennzeichnet, dass** der horizontale plattenförmige Körper (32) zwei Arme (33) (34) aufweist, die einander zugewandt sind, transversal voneinander beabstandet sind und durch entsprechende Abschnitte der Innenfläche begrenzt sind; wobei einer (33) der Arme (33) (34) stabil mit der vertikalen Platte (30) verbunden ist oder einen Teil dieser bildet.

8. Das Element nach Anspruch 7, **dadurch gekennzeichnet, dass** die Arme (33) (34) verschiedene Längen aufweisen.

9. Das Element nach einem der vorstehenden Ansprüche, **dadurch gekennzeichnet, dass** das Element einen zweiten horizontalen plattenförmigen Körper (31) aufweist, der sich in einer überhängenden Art von der vertikalen Platte (30) erstreckt und mit der vertikalen Platte (30) in einer von dem ersten horizontalen plattenförmigen Körper (32) beabstandeten Position gekoppelt ist.

10. Das Element nach Anspruch 9, **dadurch gekennzeichnet, dass** der erste und der zweite horizontale plattenförmige Körper durch entsprechende Innenflächen begrenzt sind, die identisch oder verschieden sind.

11. Das Element nach einem der vorstehenden Ansprüche, **dadurch gekennzeichnet, dass** die vertikale Befestigungsplatte (30) und der horizontale plattenförmige Körper Teil eines monolithischen Körpers sind, der einstückig ausgebildet ist.

12. Das Element nach Anspruch 9, **dadurch gekennzeichnet, dass** die vertikale Befestigungsplatte (30) und der erste und der zweite horizontale plattenförmige Haltekörper einen Zwischenabschnitt bzw. zwei Anschlussabschnitte einer einzelnen Platte oder eines einzelnen Blechs bilden, die/das metallisch, monolithisch geschnitten und U-förmig gebogen ist.

13. Eine Anordnung (12) zum Überführen von Hohlglasartikeln (2); wobei die Anordnung eine horizontale Trägerplatte (10) zum Tragen der zu überführenden Glasartikel (2) aufweist, einen Förderer (13) zum Abziehen der Artikel mit einem Übergabezweig (14), der von der Trägerplatte (10) beabstandet und mit dieser komplanar ist, sowie eine Überführungsvorrichtung (16) zum Überführen der Hohlglasartikel von der horizontalen Trägerplatte zu dem Übergabezweig; wobei die Überführungsvorrichtung (16) ein Greifelement (27) zum Greifen der zu überführenden Artikel aufweist, das zumindest einen Sitz (28) zum Aufnehmen von zumindest einem Teil eines zu überführenden Artikels (2) aufweist, einen motorisierten Gelenkarm (19), der das Greifelement (27) trägt, und Steuereinrichtungen zum Steuern des Gelenkarms, um das Greifelement entlang einer kurvigen Bahn zu führen, **dadurch gekennzeichnet, dass** das Greifelement (27) wie in Anspruch 1 beschrieben hergestellt ist.

14. Die Anordnung nach Anspruch 13, **dadurch gekennzeichnet, dass** die Anordnung eine Schnellkopplungsvorrichtung (42) aufweist, welche die vertikale Befestigungsplatte (10) mit dem motorisierten Gelenkarm (19) verbindet, um das Greifelement von oben zu entnehmen; wobei die Vorrichtung eine vertikale Führung (43) und einen Schiebebefestigungsabschnitt (44) aufweist, der stabil mit dem Greifelement (27) verbunden und mit der Führung gekoppelt ist, so dass dieser vertikal aus der Führung geschoben werden kann.

15. Die Anordnung nach Anspruch 14, **dadurch gekennzeichnet, dass** der Schiebebefestigungsabschnitt (44) und zumindest die vertikale Platte (30) Teil eines Körpers bilden, der einstückig ausgebildet ist.

16. Ein Verfahren zum Überführen von Hohlglasartikeln (2) von einer horizontalen Trägerplatte (10), welche die zu überführenden Glasartikel (2) trägt, zu einem Artikelabzugsförderer (13) mit einem Übergabezweig (14), der von der horizontalen Trägerplatte (10) beabstandet und mit dieser komplanar ist, unter Verwendung eines Greifelements (27) wie in Anspruch 1 beansprucht; wobei das Verfahren die folgenden Schritte umfasst:
Sammeln der zu überführenden Artikel von der horizontalen Trägerplatte (10) durch Einsetzen des Artikels in den partiellen Gehäusesitz (28), Bewegen des Greifelements (27) von der horizontalen Trägerplatte (10) zu dem Übergabezweig (14) entlang einer kurvigen Bahn, und
Ablegen des gesammelten Artikel auf den Förderer (13),
**dadurch gekennzeichnet, dass** der Artikel mechanisch in einer fixierten Position in dem Sitz (28) in Relation zu dem Greifelement (27) während der Bewegung des Greifelements in Richtung des Förderers (13) verriegelt ist.

17. Das Verfahren nach Anspruch 16, **dadurch gekennzeichnet, dass** das winkelige Verriegeln den Schritt des teilweisen Umschließens des Artikel mittels zumindest einem horizontalen plattenförmigen Körpers (32) umfasst, der Teil des Element ist und eine geformte Aussparung (38) aufweist, die in Draufsicht ein Profil aufweist, das komplementär zu einem Umfangsabschnitt des Artikels (2) ist.

## Revendications

1. Organe de préhension mobile (27) pour un dispositif (16) permettant de transférer des articles en verre creux (2) d'une plaque de support horizontale (10) à un convoyeur de déchargement (13), l'organe de préhension (27) ayant au moins un siège de logement (28) pour au moins une partie d'un article (2) à transférer, et comprenant une plaque de fixation verticale (30) conçue pour être reliée audit dispositif de transfert, et des moyens (31) (32) pour retenir ledit article en verre (2) dans ledit siège (28), **caractérisé en ce que** lesdits moyens de retenue comprennent au moins un premier corps horizontal en forme de plaque (32) s'étendant en surplomb à partir de ladite plaque verticale (30) et relié de manière stable à une partie terminale supérieure de ladite plaque verticale (30) ; ledit premier corps horizontal en forme de plaque (32) s'étendant, en utilisation, parallèlement à la plaque de support horizontale (10) et ayant un évidement conçu pour loger, en utilisation, au moins partiellement, la partie de l'article (2) à transférer et délimité par une surface intérieure (38) pour supporter l'article ; ladite surface intérieure ayant, en vue plane, un profil complémentaire à une surface extérieure de ladite partie de l'article (2).

2. Organe selon la revendication 1, **caractérisé en ce que** ladite surface intérieure de support (38) comprend au moins une zone de support faisant face à ladite plaque verticale (30) et espacée de celle-ci.

3. Organe de préhension selon la revendication 1 ou 2, **caractérisé en ce que** ladite surface intérieure de support (38) comprend une première et au moins une seconde zone ayant des courbures différentes.

4. Organe de préhension selon la revendication 1 ou 2, **caractérisé en ce que** ladite surface intérieure de support (38) comprend une première et au moins une seconde zone convergeant l'une vers l'autre.

5. Organe de préhension selon la revendication 3 ou 4, **caractérisé en ce que** ladite surface intérieure de support (38) comprend au moins une zone plate ou dentelée.

6. Organe de préhension selon l'une quelconque des revendications précédentes, **caractérisé en ce que** ledit premier corps horizontal en forme de plaque (32) est un corps en forme de C ou de U.

7. Organe selon l'une quelconque des revendications précédentes, **caractérisé en ce que** ledit corps horizontal en forme de plaque (32) comprend deux bras (33) (34) se faisant face l'un l'autre, espacés transversalement l'un de l'autre et délimités par des parties respectives de ladite surface intérieure ; l'un (33) desdits bras (33) (34) étant relié de manière stable à, ou constituant une partie de, ladite plaque verticale (30).

8. Organe selon la revendication 7, **caractérisé en ce que** lesdits bras (33) (34) sont de longueurs différentes.

9. Organe selon l'une quelconque des revendications précédentes, **caractérisé en ce qu'**il comprend un second corps horizontal en forme de plaque (31) s'étendant en surplomb à partir de ladite plaque verticale (30) et couplé à ladite plaque verticale (30) dans une position espacée dudit premier corps horizontal en forme de plaque (32).

10. Organe selon la revendication 9, **caractérisé en ce que** lesdits premier et second corps horizontaux en forme de plaque sont délimités par des surfaces intérieures respectives, qui sont identiques, ou différentes l'une de l'autre.

11. Organe selon l'une quelconque des revendications précédentes, **caractérisé en ce que** ladite plaque de fixation verticale (30) et ledit corps horizontal en forme de plaque constituent une partie d'un corps monolithique réalisé en une seule pièce.

12. Organe selon la revendication 9, **caractérisé en ce que** ladite plaque de fixation verticale (30) et lesdits premier et second corps horizontaux de retenue en forme de plaque constituent une partie intermédiaire et, respectivement, deux parties terminales d'une seule plaque ou feuille, qui est métallique, monolithique coupée et pliée en forme de U.

13. Ensemble (12) permettant de transférer des articles en verre creux; l'ensemble comprenant une plaque de support horizontale (10) pour supporter les articles en verre (2) à transférer, un convoyeur (13) pour décharger les articles, ayant une branche de distribution (14) espacée de, et coplanaire avec, ladite plaque de support (10) et un dispositif de transfert (16) pour transférer des articles en verre creux de la plaque de support horizontale à ladite branche de distribution; ledit dispositif de transfert (16) comprenant un organe de préhension (27) pour saisir les articles à transférer et ayant au moins un siège (28) pour loger, au moins une partie d'un article (2) à transférer, un bras articulé motorisé (19) portant ledit organe de préhension (27) et des moyens de commande pour commander ledit bras articulé pour déplacer ledit organe de préhension le long d'un chemin incurvé, **caractérisé en ce que** ledit organe de préhension (27) est réalisé selon la revendication 1.

14. Ensemble selon la revendication 13, **caractérisé en ce qu'**il comprend un dispositif d'accouplement rapide (42) reliant la plaque de fixation verticale (10) audit bras articulé motorisé (19) pour extraire ledit organe de préhension par le haut ; le dispositif comprenant un guide vertical (43) et une partie de fixation de glissière (44) reliée de manière stable audit organe de préhension (27) et couplée audit guide de sorte qu'il puisse être glissé verticalement hors du guide.

15. Ensemble selon la revendication 14, **caractérisé en ce que** ladite partie de fixation de glissière (44) et au moins ladite plaque verticale (30) constituent une partie d'un corps réalisé en une seule pièce.

16. Procédé permettant de transférer des articles en verre creux (2) d'une plaque de support horizontale (10), supportant les articles en verre (2) à transférer, vers un convoyeur de déchargement d'articles (13), ayant une branche de distribution (14) espacée de, et coplanaire avec, ladite plaque de support horizontale (10), en utilisant un organe de préhension (27) tel que revendiqué dans la revendication 1 ; le procédé comprenant les étapes consistant à collecter l'article à transférer de la plaque de support horizontale (10) en insérant ledit article à l'intérieur du siège de logement partiel (28), à déplacer l'organe de préhension (27) de la plaque de support horizontale (10) vers la branche de distribution (14) le long d'un chemin incurvé et à libérer l'article collecté sur ledit convoyeur (13), **caractérisé en ce que** ledit article est verrouillé mécaniquement dans une position fixe à l'intérieur dudit siège (28) par rapport audit organe de préhension (27) pendant le déplacement dudit organe de préhension vers ledit convoyeur (13).

17. Procédé selon la revendication 16, **caractérisé en ce que** ledit verrouillage angulaire comprend l'étape consistant à envelopper partiellement l'article en utilisant au moins un corps horizontal en forme de plaque (32) constituant une partie dudit organe et ayant un évidement de forme (38) ayant, en vue plane , un profil complémentaire à une partie du périmètre dudit article (2).
